(19) **Europäisches Patentamt / European Patent Office / Office européen des brevets**

(11) **EP 3 960 562 A1**

(12) # EUROPEAN PATENT APPLICATION

(43) Date of publication:
**02.03.2022 Bulletin 2022/09**

(21) Application number: **20193536.8**

(22) Date of filing: **31.08.2020**

(51) International Patent Classification (IPC):
**B60W 30/095** $^{(2012.01)}$     **B62D 15/02** $^{(2006.01)}$
**G08G 1/16** $^{(2006.01)}$

(52) Cooperative Patent Classification (CPC):
**B62D 15/0265; B60W 30/0956; B62D 15/025; G08G 1/167**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventor: **WALLIN, John Patrik**
**41262 Gothenburg (SE)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR PATH PLANNING**

(57)     A computer implemented method for path planning comprises the following steps carried out by computer hardware components: determining a desired path to a target, the desired path represented by a plurality of nodes; determining whether an obstacle is present along the desired path; and changing a location of at least one of the nodes if it is determined that an obstacle is present along the desired path.

EP 3 960 562 A1

**Description**

FIELD

The present disclosure relates to methods and systems for path planning, for example for lane centering.

BACKGROUND

Lane centering is an important task, in particular for (at least partially) autonomously driving vehicles. In lane centering systems, it is common that a lane center path is derived from the vision detected left and right lane markers for the host lane. This center path is then used in the lane centering system as a reference for a control module in order to keep the host vehicle in the center of the lane.

By only using the lane center as the reference for the control module, the complete system will not be able to generate a collision free path if, for example, debris is present in the middle of the road ahead. Current lane centering systems do not have the ability to maneuver around obstacles on the road, but do instead rely on driver intervention to handle the situation.

Accordingly, there is a need to improve lane centering systems.

SUMMARY

The present disclosure provides computer implemented methods, a computer system, a vehicle and a non-transitory computer readable medium according to the independent claims. Embodiments are given in the subclaims, the description and the drawings.

In one aspect, the present disclosure is directed at a computer implemented method for path planning, the method comprising the following steps performed (in other words: carried out) by computer hardware components: determining a desired path to a target, the desired path represented by a plurality of nodes; determining whether an obstacle is present along the desired path; and changing a location of at least one of the nodes if it is determined that an obstacle is present along the desired path.

In other words, a method for path planning (for example for lane centering) may be provided, in which nodes which define the path are shifted based on a detected obstacle.

The method may be used for lane centering for vehicle collision avoidance with objects whilst retaining the vehicle within the lane. Thus, a collision free path planning for lane centering may be provided.

According to another aspect, determining whether an obstacle is present along the desired path comprises determining whether an obstacle intersects (or overlaps) with an area around the desired path. Thus, not only the desired path itself may be considered for obstacle avoidance, but also the area around the desired path.

According to another aspect, the area is determined based on a projection of the desired path perpendicular to a direction of the desired path. For example, an area to the left and to the right of the desired path may be considered.

According to another aspect, the area has a width based on a width of a vehicle which is to follow the desired path. For example, if the center of the vehicle follows the desired path, the body of the vehicle may occupy a space around the desired path, which may be taken into account by the width of the area.

According to another aspect, if it is determined that an obstacle is present along the desired path, it is determined at which side of the desired path the obstacle is present. This may provide information as to whether the desired path should be changed to pass by the obstacle on the right side of the desired path (if the obstacle is detected on the left side of the desired path), or whether the desired path should be changed to pass by the obstacle on the left side of the desired path (if the obstacle is detected on the right side of the desired path).

According to another aspect, if it is determined that an obstacle is present along the desired path, it is determined whether sufficient space is available to pass the obstacle. For example, it may be determined whether sufficient space is available on a road to pass without leaving the road. If enough space is not available, an emergency routine may be initiated; for example the vehicle may be brought to a stop by breaking, or control may be handed back to a conductor (or driver) of the vehicle.

According to another aspect, changing the location of at least one of the nodes comprises changing a lateral position of the at least one node. Lateral may for example be defined as orthogonal to a driving direction (i.e. left, right) or to a direction orthogonal to a forward direction defined by the desired path.

According to another aspect, changing the location of at least one of the nodes comprises changing lateral positions of a plurality of the nodes to increase a lateral distance of the nodes from the desired path before the obstacle and reduce a lateral distance of the nodes from the desired path after the obstacle. This may provide that the desired path is left for avoiding the obstacle, but it is returned to the desired path after the obstacle is passed.

According to another aspect, changing the location of at least one of the nodes comprises changing the location of the at least one of the nodes based on a safety margin. This may provide that the obstacle is safely avoided, even if, for example, measurements of the position of the obstacle or the position of the vehicle on the desired path are not correct.

According to another aspect, a path which is represented by the nodes with the at least one node having a changed location is provided as the actual path (in other words: corrected path; in other words: path with obstacle avoidance).

According to another aspect, the plurality of nodes are provided in a hierarchy. For example, each node may have a parent node (except the start node, which does not have a parent node), and the hierarchy may end when a target (or target area) or goal (or goal area) is reached.

In another aspect, the present disclosure is directed at a computer implemented method for steering a vehicle, the method comprising the following steps carried out by computer hardware components: steering the vehicle based on the computer implemented method for path planning described herein.

In another aspect, the present disclosure is directed at a computer system, said computer system comprising a plurality of computer hardware components configured to carry out several or all steps of the computer implemented method described herein.

In another aspect, the present disclosure is directed at a vehicle comprising the computer system described herein and at least one sensor (for example camera, lidar sensor or radar sensor) configured to determine the obstacle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1      an illustration of several nodes according to various embodiments;

Fig. 2      an illustration of finding collisions between sampled nodes and non-drivable areas according to various embodiments;

Fig. 3      an illustration of re-planning around a non-drivable area according to various embodiments;

Fig. 4      an illustration of shifting nodes around a blocked area according to various embodiments;

Fig. 5      an illustration of the shifting of nodes back to the lane center and resumption of the normal sampling according to various embodiments;

Fig. 6      an illustration of a goal path after re-planning around non-drivable area according to various embodiments;

Fig. 7      an illustration of a method for path planning according to various embodiments;

Fig. 8      a path planning system according to various embodiments; and

Fig. 9      a computer system with a plurality of computer hardware components configured to carry out steps of a computer implemented method for path planning according to various embodiments.

DETAILED DESCRIPTION

According to various embodiments, for creating a collision free reference path to the control system, information about the host lane center may be used, and the drivable segments on the road may be used to create a collision free reference path. The drivable segments may be detected by using vision, radar and/or a lidar sensor and may be represented in a grid format. The drivable segments may be determined by mapping the cells in the grid to the area on the road ahead and marking the drivable areas as "free" in the grid, and the non-drivable areas as "blocked" in the grid. This way, the non-drivable areas of the road segment ahead may be determined.

The lane center path (which may be referred to as the desired path) may be discretized into (or represented by) a plurality of nodes, for example equidistantly spaced nodes, and a start node may be placed at the start of the lane center path. Each node may contain its positional information and the reference generation method may then sample these nodes, one by one, and use node information to perform evaluations and calculations in the method. In other words, "sampling" a node may refer to selecting one of the discretized nodes and using the node information to perform evaluations and calculations in the method. In the first node sampling instance, the node longitudinally closest to the start node is sampled. After this, the node longitudinally closest to the previous sampled node will be sampled. Then, the sampled node may be connected to the node that was sampled the previous iteration, called parent node.

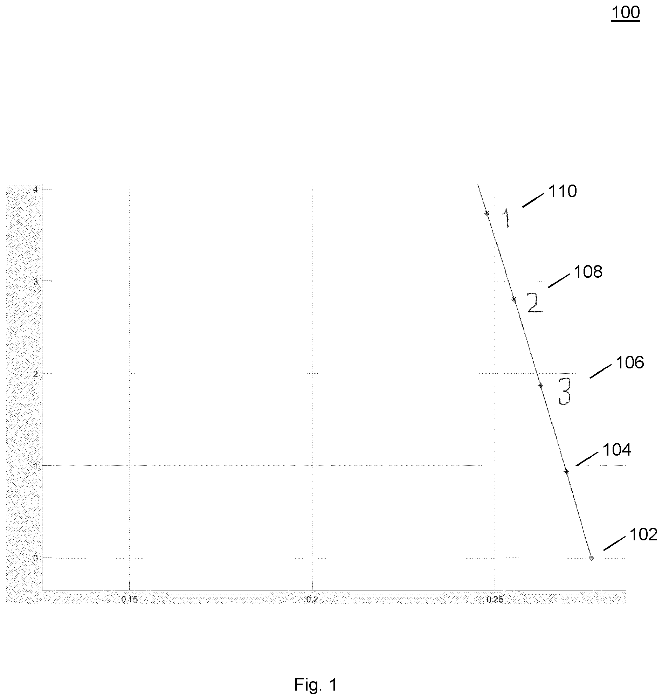

Fig. 1 shows an illustration 100 of several nodes according to various embodiments. A start node 102 may be followed by sampled nodes 104, 106, 108, 110 along a lane center path. The parent node of node 110 is node 108, and the parent node of node 108 is node 106. All of the nodes may follow this same principle of how they are sampled and which node is their parent node, except for the start node 102, which does not have a parent node. This process may continue until a node is sampled inside a pre-defined goal region (which may be referred to as target), or until a collision between a non-drivable area and a straight line segment between the sampled node and its parent node is detected.

Since a reference path should be tracked by the center of the vehicle, it may not be sufficient to just ensure that the straight line segments between the nodes on the lane center path are collision free. This may be due to the width of the car also needing to be considered. This may be handled by projecting the same straight line segment perpendicularly outwards from the original line segment, for example at a distance of half the vehicle width. Similarly, it may be checked to see if any collision between these lines and any of the non-drivable areas exists. Furthermore, the perpendicular lines may be also connected and it may be checked if any collisions exist between any non-drivable areas and these lines. This may provide safeguard from missing an intersection with any non-drivable area if any of the perpendicular lines are contained within a non-drivable area.

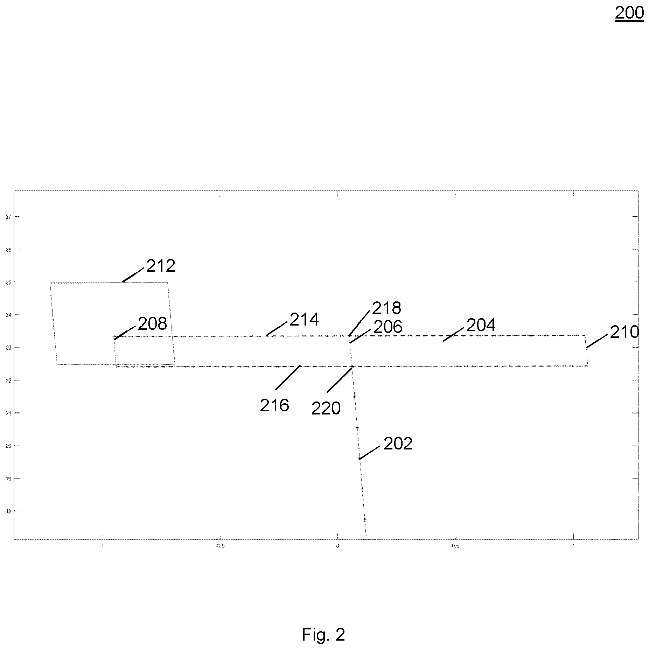

Fig. 2 shows an illustration 200 of finding collisions between sampled nodes and non-drivable areas according to various embodiments. A plurality of nodes are shown (one of them is exemplarily labelled as node 202), including the (presently) sampled node 218 and the node below is its parent node 220. Line 206 is the line segment between the sampled node 218 and its parent node 220. Lines 208 and 210 are the projected lines corresponding to the vehicle width. Lines 214 and 216 are the "safeguard" lines. The lines 208, 210, 214, 216 define a space 204 which potentially is occupied by the vehicle and shall not overlap with any non-drivable area (for example obstacle). Box 212 represents a non-drivable area. It can be seen that in the example illustrated in Fig. 2, the lines 208 and 214 intersect with the blocked area represented by box 212.

Once an intersection is detected, a re-planning phase is triggered. First, it may be determined on which side of the lane center path the collision was detected. In the scenario shown in Fig. 2, this would be on the left side of the lane center. Secondly, it may be verified that the remaining space in the lane on the "passing" side of the obstacle is sufficiently large for the host vehicle width, plus a minimum safety margin, to pass through. If the distance is not large enough, the method may be cancelled since sufficient space to pass to non-drivable area is not available.

However, if the distance is sufficiently large, a lateral goal point may be calculated, for example as a lateral offset from the lane center path. For example, the lateral goal point may be placed between (for example right in between, in other words: in the middle between) the closest point of the non-drivable area and the lane marker edge on the "passing" side. This may ensure that a safety margin to both sides is kept. The safety margin on each side may be calculated as:

$$d_{sm} = \frac{d_{ND2LC} + \frac{width_l}{2} - width_c - d_{MSM}}{2}$$

where $d_{ND2LC}$ may be the lateral distance from the closest edge of the non-drivable area to the lane center, $width_l$ may be the lane width, $width_c$ may be the car width and $d_{MSM}$ may be the minimum safety margin required to classify the space as sufficiently large. The lateral offset $lat_{offset}$ from the lane center path may then be calculated as:

$$lat_{offset} = \frac{width_c}{2} + d_{sm} - collision\ side * d_{ND2LC}$$

where *collision side* may be equal to -1 if the collision was detected on the left on the lane center path, and *collision side* may be equal to 1 if the collision was detected on the right of the lane center path.

To plan around the blocked area, the method may "back off" longitudinally and start to re-sample the nodes (in other words: to change locations of nodes). To generate a smooth path around the blocked area, a small, constant angle, $\alpha$, may be used to laterally offset the sampled nodes so that they gradually deviate from the lane center path. The longitudinal distance $d_{back\ off}$ by which the method should "back off" to reach the calculated lateral offset from the lane center path, using this constant angle, may be calculated as:

$$d_{back\ off} = lat_{offset}/\tan(\alpha)$$

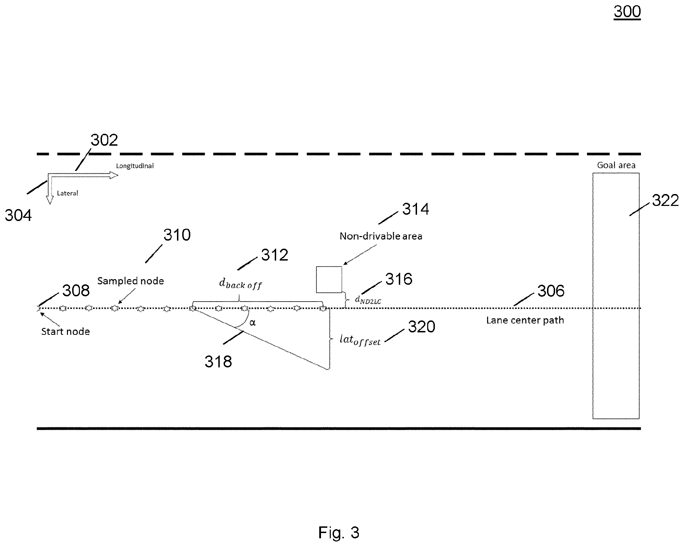

Fig. 3 shows an illustration 300 of re-planning around a non-drivable area according to various embodiments. A lane center path 306 is provided by a plurality of nodes, including a start node 308 and a sampled node 310. A longitudinal direction 302 and a lateral direction 304 may be defined with respect to a vehicle to move along the lane center path 306 towards a goal area 322. A non-drivable area 314 may be located along the vehicle's way along the lane center path 306. $d_{ND2LC}$ 316, $lat_{offset}$ 320, $d_{back\ off}$ 312, and the angle $\alpha$ 318 as described above are illustrated in Fig. 3.

If the "back off" distance would be larger than the longitudinal distance between the currently sampled node and the start node, this distance may then instead be used as the "back off" distance. However, if the "back off" distance is changed, the lateral deviation angle, $\alpha$, may need to be updated in order to reach the lateral offset point. The angle $\alpha$ may be updated as follows:

$$\alpha = \mathrm{atan}(\frac{lat_{offset}}{d_{back\ off}})$$

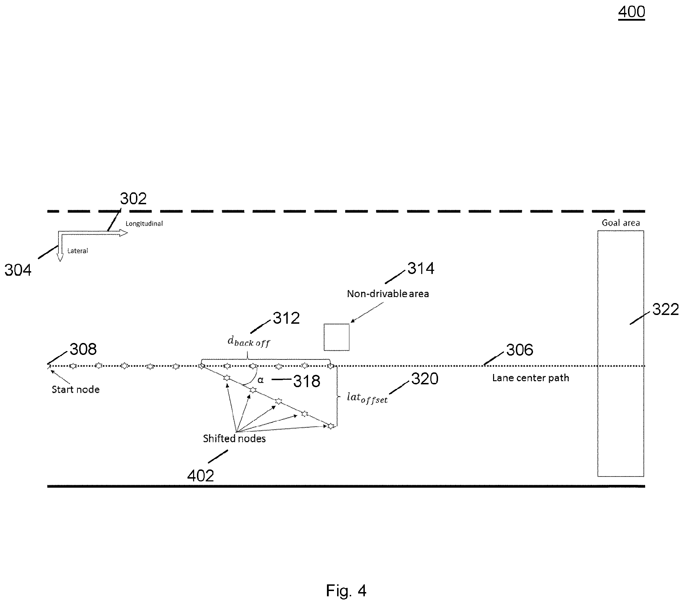

Once the $lat_{offset}$, $d_{back\ off}$ and $\alpha$ have been determined, the first of the sampled nodes, whose longitudinal position is larger than the collision node's longitudinal position, minus the "back off distance, may be determined. It may be from this node that the replanning (in other words: the changing of locations of nodes) will start. This is illustrated as the (laterally) shifted nodes 402 in Fig. 4.

Fig. 4 shows an illustration 400 of shifting nodes around a blocked area according to various embodiments. Various portions of Fig. 4 are identical or similar to what is shown in Fig. 3, so that the same reference signs may be used and duplicate description may be omitted.

The re-planning may be done by sampling the nodes again, obtaining their original position, and then shifting their lateral position, $d_{lat}$, away from the blocked area ahead, for example according to these formulas:

$$d_{lat}^{new} = d_{lat} + d_{dev}^{k};$$

$$d_{dev}^{k} = \sum_{k=1}^{N} d_{dev}^{k-1} + d_x * \tan(\alpha);$$

$$d_{dev}^{0} = 0;$$

where $d_{dev}^{k}$ may be the lateral deviation from the original node, $d_x$ may be the difference in longitudinal distance from the current node and its parent node and $\alpha$ may be the previously calculated deviation angle.

This procedure may then be followed until the longitudinal position of the currently sampled node is greater than, or equal to, the longitudinal position of the node that detected the collision. The lateral deviation may then be changed so that the nodes will be shifted towards the lane center again, starting from the current deviation, $d_{dev}^N$. This may be done in the same way as when they were shifted away from the lane center, the only difference may be that they will always be shifted with a constant deviation angle.

If a second collision with a non-drivable area would be detected during any phase of the re-planning, there does not exist enough free room on the road surface ahead to allow the host vehicle to pass safely within its own lane and the planning is stopped. In other words, if a second collision with a non-drivable area occurs during the re-planning phase, there may not be enough room in the lane ahead to allow the car to safely pass, and thus, the planning may be stopped and control may be handed back to the driver.

Once the nodes have been gradually shifted back to the lane center, the re-planning may be complete and the deviation may be set to 0 and the sampling of nodes may continue as before the re-planning started. This may continue until the goal region is reached, or until a new collision with a non-drivable area occurs, at which a new re-planning process may start.

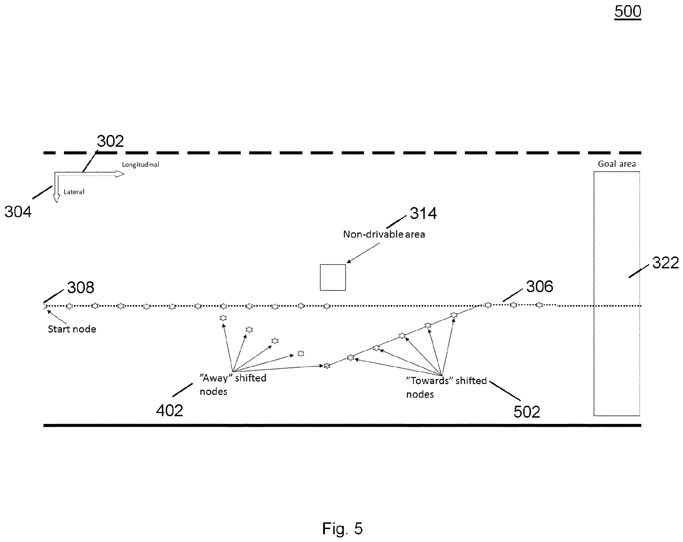

Fig. 5 shows an illustration 500 of the shifting of nodes back to the lane center and resumption of the "normal" sampling according to various embodiments. Various portions of Fig. 5 are identical or similar to what is shown in Fig. 3, so that the same reference signs may be used and duplicate description may be omitted. Nodes 502 may be shifted towards the lane center until the lane center path 306 is reached. The lane center path 306 may then be used to sample the nodes.

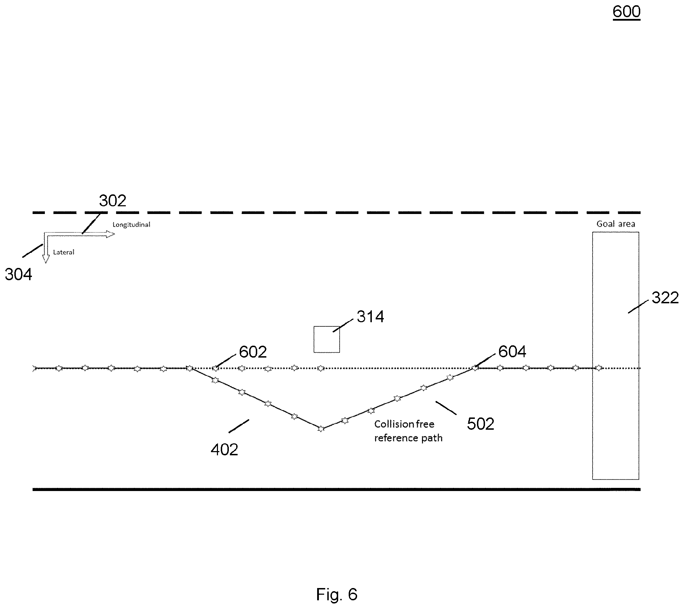

Once the goal area 322 is reached, the goal path is created by iteratively going through the parent nodes of the node that reached the goal area, and the planning is stopped. The goal path for the scenario illustrated in Fig. 3 to Fig. 5 is shown in Fig. 6.

Fig. 6 shows an illustration 600 of a goal path after re-planning around non-drivable area according to various embodiments. Various portions of Fig. 6 are identical or similar to what is shown in Fig. 3, so that the same reference signs may be used and duplicate description may be omitted. The goal path may then be used as a reference by the control system to safely stay in lane, while avoiding any blocked areas on the road.

As illustrated in Fig. 6, the nodes from node 602 onwards on the lane center path are not used, but are replaced by nodes 402, 502 to avoid the obstacle, and from node 604 onwards, the nodes on the lance center path are used again.

It is to be noted that due to taking into account the vehicle width and the safety margin, even though the obstacle 314 does not intersect with the lance center path, the obstacle 314 may safely be avoided.

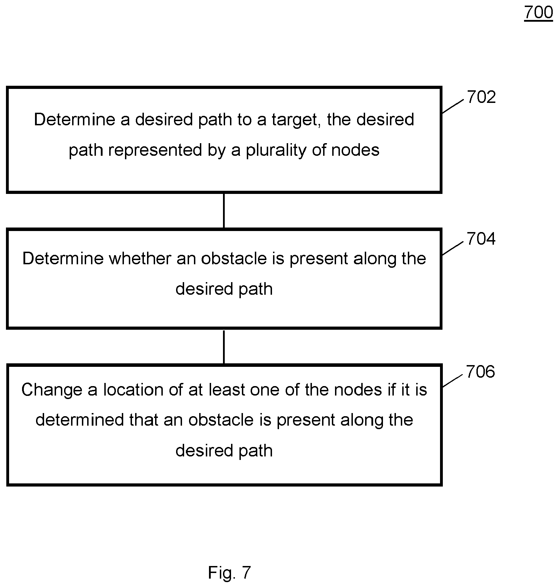

Fig. 7 shows an illustration 700 of a method for path planning according to various embodiments. At 702, a desired path to a target may be determined, wherein the desired path may be represented by a plurality of nodes. At 704, it may be determined whether an obstacle is present along the desired path. At 706, a location of at least one of the nodes may be changed if it is determined that an obstacle is present along the desired path.

According to various embodiments, determining whether an obstacle is present along the desired path may include or may be determining whether an obstacle intersects with an area around the desired path.

According to various embodiments, the area may be determined based on a projection of the desired path perpendicular to a direction of the desired path.

According to various embodiments, the area may have a width based on a width of a vehicle which is to follow the desired path.

According to various embodiments, if it is determined that an obstacle is present along the desired path, it may be determined at which side of the desired path the obstacle is present.

According to various embodiments, if it is determined that an obstacle is present along the desired path, it may be determined whether sufficient space is available to pass the obstacle.

According to various embodiments, changing the location of at least one of the nodes may include or may be changing a lateral position of the at least one node.

According to various embodiments, changing the location of at least one of the nodes may include or may be changing lateral positions of a plurality of the nodes to increase a lateral distance of the nodes from the desired path before the obstacle and reduce a lateral distance of the nodes from the desired path after the obstacle.

According to various embodiments, changing the location of at least one of the nodes may include changing the location of the at least one of the nodes based on a safety margin.

According to various embodiments, a path which is represented by the nodes with the at least one node having a changed location may be provided as the actual path.

According to various embodiments, the plurality of nodes may be provided in a hierarchy.

Each of the steps 702, 704, 706 and the further steps described above may be performed by computer hardware components.

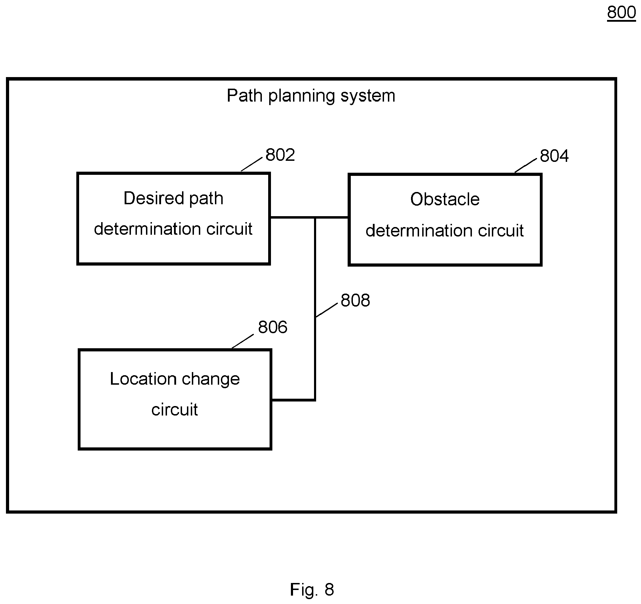

Fig. 8 shows a path planning system 800 according to various embodiments. The path planning system 800 may include a desired path determination circuit 802, an obstacle determination circuit 804, and a location change circuit 806.

The desired path determination circuit 802 may be configured to determine a desired path to a target, the desired path represented by a plurality of nodes.

The obstacle determination circuit 804 may be configured to determine whether an obstacle is present along the desired path.

The location change circuit 806 may be configured to change a location of at least one of the nodes if it is determined that an obstacle is present along the desired path.

The desired path determination circuit 802, the obstacle determination circuit 804, and the location change circuit 806 may be coupled with each other, e.g. via an electrical connection 808, such as e.g. a cable or a computer bus or via any other suitable electrical connection to exchange electrical signals.

A "circuit" may be understood as any kind of a logic implementing entity, which may be special purpose circuitry or a processor executing a program stored in a memory, firmware, or any combination thereof.

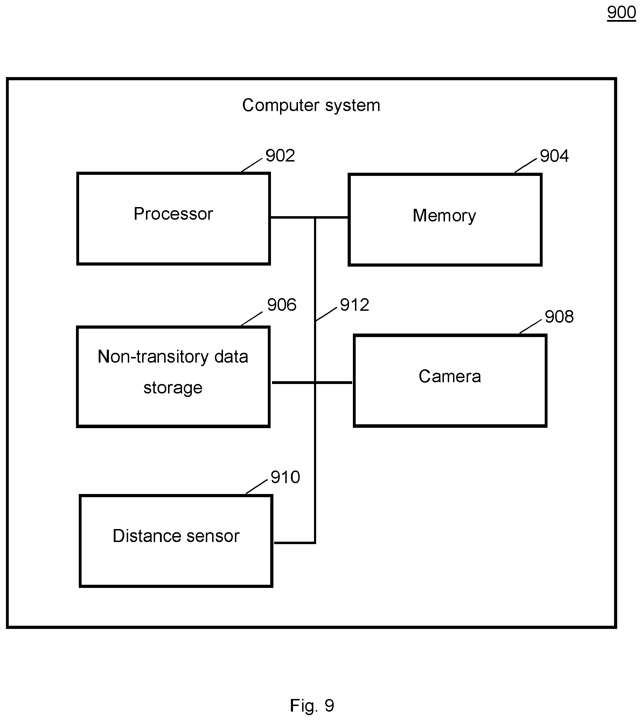

Fig. 9 shows a computer system 900 with a plurality of computer hardware components configured to carry out steps of a computer implemented method for path planning according to various embodiments. The computer system 900 may include a processor 902, a memory 904, and a non-transitory data storage 906. A camera 908 and/or a distance sensor 910 (for example a radar sensor and/ or a lidar sensor) may be provided as part of the computer system 900 (like illustrated in Fig. 9), or may be provided external to the computer system 900.

The processor 902 may carry out instructions provided in the memory 904. The non-transitory data storage 906 may store a computer program, including the instructions that may be transferred to the memory 904 and then executed by the processor 902. The camera 908 may be used for determining a lane center (or a lane center path). The distance sensor 910 may be used to determine obstacles.

The processor 902, the memory 904, and the non-transitory data storage 906 may be coupled with each other, e.g. via an electrical connection 912, such as e.g. a cable or a computer bus or via any other suitable electrical connection to exchange electrical signals. The camera 908 and/or the distance sensor 910 may be coupled to the computer system 900, for example via an external interface, or may be provided as parts of the computer system (in other words: internal to the computer system, for example coupled via the electrical connection 912).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the path planning system 800 and/or for the computer system 900.

Reference numeral list

| | |
|---|---|
| 100 | illustration of several nodes according to various embodiments |
| 102 | start node |
| 104 | sampled node |
| 106 | sampled node |
| 108 | sampled node |
| 110 | sampled node |
| | |
| 200 | illustration of finding collisions between sampled nodes and non-drivable areas according to various embodiments |
| 202 | node |
| 204 | space potentially occupied by a vehicle |
| 206 | line segment between the sampled node and its parent node |
| 208 | projected line corresponding to the vehicle width |
| 210 | projected line corresponding to the vehicle width |
| 212 | box representing a non-drivable area |
| 214 | safeguard line |
| 216 | safeguard line |
| 218 | sampled node |
| 220 | parent node of sampled node |
| | |
| 300 | illustration of re-planning around a non-drivable area according to various embodiments |
| 302 | longitudinal direction |
| 304 | lateral direction |
| 306 | lane center path |

| 308 | start node |
|---|---|
| 310 | sampled node |
| 312 | $d_{back\ off}$ |
| 314 | non-drivable area |
| 316 | $d_{ND2LC}$ |
| 318 | angle $\alpha$ |
| 320 | $lat_{offset}$ |
| 322 | goal area |
| 400 | illustration of shifting nodes around a blocked area according to various embodiments |
| 402 | shifted nodes |
| 500 | illustration of the shifting of nodes back to the lane center and resumption of the normal sampling according to various embodiments |
| 502 | nodes shifted towards lane center |
| 600 | illustration of a goal path after re-planning around non-drivable area according to various embodiments |
| 602 | node |
| 604 | node |
| 700 | illustration of a method for path planning according to various embodiments |
| 702 | step of determining a desired path to a target, the desired path represented by a plurality of nodes |
| 704 | step of determining whether an obstacle is present along the desired path |
| 706 | step of changing a location of at least one of the nodes if it is determined that an obstacle is present along the desired path |
| 800 | path planning system according to various embodiments |
| 802 | desired path determination circuit |
| 804 | obstacle determination circuit |
| 806 | location change circuit |
| 808 | connection |
| 900 | computer system according to various embodiments |
| 902 | processor |
| 904 | memory |
| 906 | non-transitory data storage |
| 908 | camera |
| 910 | distance sensor |
| 912 | connection |

**Claims**

1. Computer implemented method for path planning,
   the method comprising the following steps carried out by computer hardware components:

   - determining (702) a desired path to a target, the desired path represented by a plurality of nodes;
   - determining (704) whether an obstacle is present along the desired path; and
   - changing (706) a location of at least one of the nodes if it is determined that an obstacle is present along the desired path.

2. The computer implemented method of claim 1,
   wherein determining whether an obstacle is present along the desired path comprises determining whether an obstacle intersects with an area around the desired path.

3. The computer implemented method of claim 2,
   wherein the area is determined based on a projection of the desired path perpendicular to a direction of the desired path.

8

**4.** The computer implemented method of at least one of claims 2 to 3,
wherein the area has a width based on a width of a vehicle which is to follow the desired path.

**5.** The computer implemented method of at least one of claims 1 to 4,
wherein, if it is determined that an obstacle is present along the desired path, it is determined at which side of the desired path the obstacle is present.

**6.** The computer implemented method of at least one of claims 1 to 5,
wherein, if it is determined that an obstacle is present along the desired path, it is determined whether sufficient space is available to pass the obstacle.

**7.** The computer implemented method of at least one of claims 1 to 6,
wherein changing the location of at least one of the nodes comprises changing a lateral position of the at least one node.

**8.** The computer implemented method of at least one of claims 1 to 7,
wherein changing the location of at least one of the nodes comprises changing lateral positions of a plurality of the nodes to increase a lateral distance of the nodes from the desired path before the obstacle and reduce a lateral distance of the nodes from the desired path after the obstacle.

**9.** The computer implemented method of at least one of claims 1 to 8,
wherein changing the location of at least one of the nodes comprises changing the location of the at least one of the nodes based on a safety margin.

**10.** The computer implemented method of at least one of claims 1 to 9,
wherein a path which is represented by the nodes with the at least one node having a changed location is provided as the actual path.

**11.** The computer implemented method of at least one of claims 1 to 10,
wherein the plurality of nodes are provided in a hierarchy.

**12.** A computer implemented method for steering a vehicle,
the method comprising the following steps carried out by computer hardware components:
steering the vehicle based on the computer implemented method of at least one of claims 1 to 11.

**13.** Computer system, the computer system being configured to carry out the computer implemented method of at least one of claims 1 to 12.

**14.** A vehicle comprising:

the computer system of claim 13; and
at least one sensor configured to determine the obstacle.

**15.** Non-transitory computer readable medium comprising instructions for carrying out the computer implemented method of at least one of claims 1 to 12.

Fig. 1

200

Fig. 2

300

302
Longitudinal

Lateral

304

314
Non-drivable area

310
Sampled node

312
$d_{back\,off}$

308
Start node

316
$d_{ND2LC}$

306
Lane center path

α

320

318

$lat_{offset}$

Goal area

322

Fig. 3

<u>400</u>

302

Longitudinal

304

Lateral

314

Non-drivable area

312

$d_{back\,off}$

308

Start node

$\alpha$ — 318

Shifted nodes

402

306

Lane center path

320

$lat_{offset}$

Goal area

322

Fig. 4

Fig. 5

<u>600</u>

302

Longitudinal

Lateral

304

Goal area

314

602

604

322

402

Collision free
reference path

502

Fig. 6

_700_

Determine a desired path to a target, the desired path represented by a plurality of nodes ⟋702

Determine whether an obstacle is present along the desired path ⟋704

Change a location of at least one of the nodes if it is determined that an obstacle is present along the desired path ⟋706

Fig. 7

800

Path planning system

802

Desired path
determination circuit

804

Obstacle
determination circuit

808

806

Location change
circuit

Fig. 8

900

Computer system

```
                902                                   904
┌─────────────────────┐           ┌─────────────────────┐
│                     │           │                     │
│     Processor       │───────────│      Memory         │
│                     │    │      │                     │
└─────────────────────┘    │      └─────────────────────┘
                           │
                906        │ 912              908
┌─────────────────────┐    │      ┌─────────────────────┐
│                     │    │      │                     │
│ Non-transitory data │    │      │      Camera         │
│     storage         │───────────│                     │
│                     │           │                     │
└─────────────────────┘           └─────────────────────┘

                910
┌─────────────────────┐
│                     │
│   Distance sensor   │
│                     │
└─────────────────────┘
```

Fig. 9

Europäisches
Patentamt

European
Patent Office

Office européen
des brevets

# EUROPEAN SEARCH REPORT

Application Number

EP 20 19 3536

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/092500 A1 (ZOOX INC [US]) 7 May 2020 (2020-05-07) * paragraphs [0017] - [0019], [0024], [0035] - [0038], [0048], [0049], [0052], [0060]; claims; figures * ----- | 1-15 | INV. B60W30/095 B62D15/02 G08G1/16 |
| X | DE 10 2018 212060 A1 (BOSCH GMBH ROBERT [DE]) 23 January 2020 (2020-01-23) * paragraphs [0041] - [0049]; claims; figures * ----- | 1,12-15 | |
| X | US 2018/238696 A1 (TAKEDA MASANORI [JP]) 23 August 2018 (2018-08-23) * paragraphs [0096], [0097], [0128] - [0131]; claims; figures * ----- | 1,12-15 | |

| TECHNICAL FIELDS SEARCHED (IPC) |
|---|
| B60W G08G B62D |

The present search report has been drawn up for all claims

| Place of search | Date of completion of the search | Examiner |
|---|---|---|
| The Hague | 1 February 2021 | Ducher, Alban |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 19 3536

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2021

| Patent document cited in search report | Publication date | Patent family member(s) | Publication date |
|---|---|---|---|
| WO 2020092500 A1 | 07-05-2020 | NONE | |
| DE 102018212060 A1 | 23-01-2020 | DE 102018212060 A1<br>WO 2020015990 A1 | 23-01-2020<br>23-01-2020 |
| US 2018238696 A1 | 23-08-2018 | CN 107851392 A<br>DE 112016003285 T5<br>JP 6429217 B2<br>JP WO2017014012 A1<br>US 2018238696 A1<br>WO 2017014012 A1 | 27-03-2018<br>12-04-2018<br>28-11-2018<br>08-03-2018<br>23-08-2018<br>26-01-2017 |

EPO FORM P0459

For more details about this annex : see Official Journal of the European Patent Office, No. 12/82